# EUROPEAN PATENT SPECIFICATION

(11) **EP 3 408 581 B1**
(45) Date of publication and mention of the grant of the patent: **07.04.2021**
(21) Application number: 17701349.7
(22) Date of filing: 26.01.2017
(51) Int. Cl.: F17C 13/04

(54) **PRESSURE REDUCER DEVICE WITH STEPPER MOTOR FOR ADJUSTING THE FLOW RATE**
DRUCKMINDERER MIT SCHRITTMOTOR ZUR EINSTELLUNG DES DURCHFLUSSES
DISPOSITIF DÉTENDEUR À MOTEUR PAS-À-PAS POUR RÉGLER LE DÉBIT

(30) Priority: 28.01.2016 LU 92963
(43) Date of publication of application: 05.12.2018
(73) Proprietor: Luxembourg Patent Company S.A., 7440 Lintgen (LU)
(72) Inventor: BECKER, Daniel, 54329 Konz (DE); SCHMITZ, Jean-Claude, 7340 Heisdorf (LU)
(74) Representative: Lecomte & Partners
(86) International application number: PCT/EP2017/051639
(87) International publication number: WO 2017/129676

(56) References cited:
- EP-A1- 2 868 970
- EP-A1- 2 940 370
- EP-A2- 2 339 222
- WO-A1-2014/125010
- WO-A1-2015/132285
- DE-A1-102012 102 646
- US-A1- 2005 103 342
- US-A1- 2008 150 739
- US-B1- 6 467 505

## Description

### Technical field

The invention is directed to the field of the distribution of gas stored under pressure, in particular in gas cylinders. More specifically, the invention is directed to a device to be mounted on a gas cylinder and for regulating the outlet pressure and/or flow rate that is outputted to an end user.

### Background art

Prior art patent document published WO 2015/132285 A1 discloses a pressure reducer device with a flow selector. The flow selector comprises a rotatable disk with a series of calibrated holes that are selectively movable in a gas tight manner along a gas passage connected to the output of the device. The selection of the flow rate is operated manually by manipulating a rotatable hand-wheel coupled to the rotatable disk. The hand-wheel comprises a series of detents along a circular arc and that cooperate selectively with a ball resiliently biased towards said detents for temporarily holding the disk in a predetermined position.

The above described teaching is interesting in that the flow rate can be selected only by manually manipulating the hand-wheel. Also, in that teaching, a flow rate is provided only when the rotating disk is positioned at one of the predetermined positions, being clear that the flow rate can become null or near to null when the disk is in an intermediate position. In certain circumstances, in particular in medical applications, the end user can experience difficulties in properly manipulating the flow selector, potentially leading to severe consequences.

Prior art patent document published US 6,467,505 B1 discloses a pressure reducer device according to the preamble of claim 1. That device comprises a first stage of regulation of the pressure and a second stage of regulation of the flow rate. The second stage comprises a regulating valve with a varying cross-section for the gas by translational movements operated by the outlet pressure on a membrane, and a stepper motor that modifies a pre-constraint of a spring of the regulating valve.

### Summary of invention

### Technical Problem

The invention has for technical problem to provide a pressure reducer device with a flow selector that can be more easily adjusted.

### Technical solution

The invention is directed to a pressure reducer device for mounting on a gas cylinder, comprising: a pressure reducer; and a flow selector fluidly connected to the pressure reducer, downstream of said reducer; wherein the device further comprises: a stepper motor adapted to actuate the flow selector, wherein the flow selector comprises a rotating element coupled to the stepper motor, the rotation of said element changing the cross-section of a passage for the gas; and the rotating element comprises a disk with a varying cross-section for the gas, said disk being in sliding contact with a fixed passage so as to select the cross-section that is traversed by the gas.

Advantageously, the stepper motor is such that it consumes electrical power only when moving, i.e. when actuating the flow selector.

According to a preferred embodiment, said device comprises a body housing the pressure reducer and the flow selector, the stepper motor being mounted on said body.

According to a preferred embodiment, the body comprises a threaded end with a gas inlet, and a gas outlet downstream of the flow selector.

According to a preferred embodiment, the flow selector is configured to comprise preselected positions of the rotating element, each position corresponding to a specific flow rate.

According to a preferred embodiment, the device further comprises mechanical means, preferably of the detent ball type, for temporarily holding the rotating element in each of the preselected positions.

According to a preferred embodiment, the stepper motor comprises step positions that corresponds to the preselected positions of the rotation element.

According to a preferred embodiment, the disk comprises calibrated apertures distributed along a circular arc around the rotating axis of the disk, said apertures forming the varying cross-section for the gas.

According to a preferred embodiment, the device further comprises: an electronic control unit configured for controlling the stepper motor; and preferably a display connected to the electronic unit and configured for displaying the flow rate.

According to a preferred embodiment, the electronic control unit comprises at least one input for manually selecting a flow rate, preferably a first input for increasing step by step the flow rate and a second input for decreasing step by step the flow rate.

According to a preferred embodiment, the electronic control unit comprises a regulation, preferably a closed loop regulation, of an output variable of an end user to be connected to the device, said variable being directly influenced by the gas flow rate.

According to a preferred embodiment, the output variable is the concentration of oxygen in the blood of a patient.

According to a preferred embodiment, the device further comprises a sensor of the concentration of oxygen in the blood of the patient, said sensor being configured for being connected to the electronic control unit for regulating the concentration of oxygen in the blood.

According to a preferred embodiment, the device further comprises a cover, preferably made of plastic material, housing the pressure reducer, the flow selector, the stepper motor and the electronic control unit.

According to a preferred embodiment, the cover comprises an outer wall carrying the display and at least one input for selecting the flow rate, said at least one input preferably comprising a first input for increasing step by step the flow rate and a second input for decreasing step by step the flow rate.

### Advantages of the invention

The invention is particularly interesting in that it substantially increases the ease of use of the device. The flow rate can be adjusted in a safer and easier way. The use of a stepper motor is particularly interesting because it does not require a feedback control of the position that is demanded. Also, once the desired adjustment of the flow selector is achieved, the stepper motor does not consume any power contrary to a proportional electromagnetic valve. Since the adjustment might not happen often, the use of a stepper motor is particularly interesting.

### Brief description of the drawings

Figure 1 is a cross-sectional view of a pressure reducer device in accordance with the invention.
Figure 2 is a graphical illustration of the different flow rates that can be selected with device of figure 1.
Figure 3 illustrates the architecture of a pressure reducer device in accordance with the invention.
Figure 4 is a schematic illustration of a pressure reducer device in accordance with the invention equipped with cover.

### Description of an embodiment

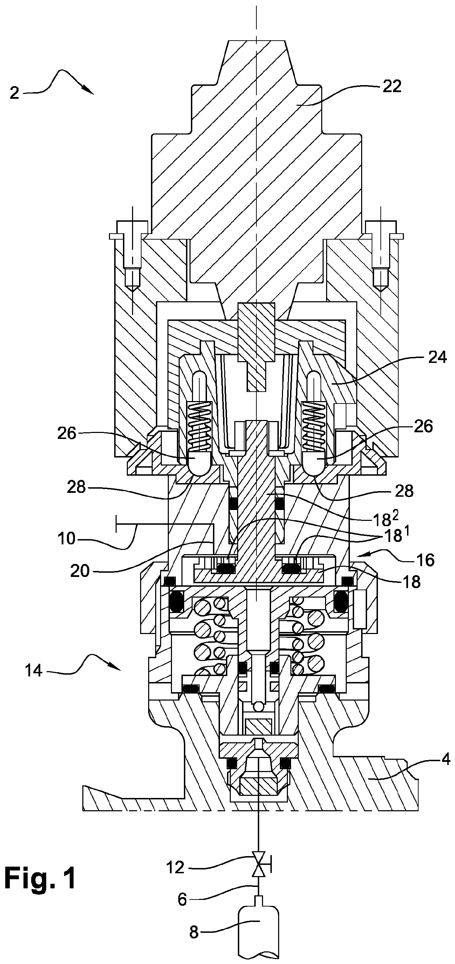

Figure 1 illustrates with details a pressure reducer device in accordance with the invention. The device 2 comprises a body 4 whose lower part which is only schematically represented for the sake of clarity. The body 4 comprises an inlet 6 adapted to be mounted on the neck of a gas container like a gas cylinder 8. The body 4 can be comprised of different elements assembled together. It comprises a gas outlet 10 and a gas passage fluidly interconnecting the inlet 6 with the outlet 10.

The device 2 can comprise a shut-off valve 12, e.g. of the manual type. The presence of a shut-off valve is optional. The body 4 houses a pressure reducer 14 that is fluidly in the passage interconnecting the inlet 6 with the outlet 10, downstream of the shut-off valve 12. The pressure reducer is of a classical construction that is well known from the skilled person. A detailed description is not therefore necessary.

The body 4 houses also a flow selector 16 that is fluidly in the passage interconnecting the inlet 6 with the outlet 10, downstream of the pressure reducer 14. For instance, the flow selector 16 is of the rotary disk type, being understood that other types of flow selectors can be used. The flow selector 16 comprises a rotating disk 18 provided with a series of calibrated holes 18¹ distributed along a circle or at least a circular arc centred with the rotating axis of the disk. The holes 18¹ have different cross-section so as to be selectively positioned in front of the gas passage 20 in connection with the outlet 10 and thereby adjust the flow rate at different predetermined values. The disk 18 comprises a shaft 18² that is coupled to the electric stepper motor 22 via the intermediate element 24. This latter comprises a series of slidable elements 26 that are biased by springs towards detents 28 formed in a part that is rigid with the body 2. The spring biased elements 26 and the corresponding detents 28 serve for holding the disk 18 in predetermined angular positions where one of the calibrated holes is positioned in front of the gas passage 20.

A stepper motor or step motor or stepping motor is an electric motor that divides a full rotation into a number of equal steps. The motor's position can then be commanded to move and hold at one of these steps without any feedback sensor. DC brushed motors rotate continuously when DC voltage is applied to their terminals. The stepper motor is known by its property to convert a train of input pulses, typically square wave pulses, into a precisely defined increment in the shaft angular position. Each pulse moves the shaft through a fixed angle. Stepper motors effectively have multiple "toothed" electromagnets arranged around a central gear-shaped piece of iron. The electromagnets are energized by an external driver circuit or a microcontroller. To make the motor shaft turn, first, one electromagnet is given power, which magnetically attracts the gear's teeth. When the gear's teeth are aligned to the first electromagnet, they are slightly offset from the next electromagnet. This means that when the next electromagnet is turned on and the first is turned off, the gear rotates slightly to align with the next one. From there the process is repeated. Each of those rotations is called a "step", with an integer number of steps making a full rotation. In that way, the motor can be turned by a precise angle.

The flow selector can be of another type. It can comprise a rotating disk with, instead of a series of perforated holes, a continuous actuate slot whose width varies along the actuate direction of said slot. The flow selector can also be of the type comprising a rotation element whose rotation moves axially a flow restrictor. It can also be combined with the pressure reducer when this latter is adjustable. The adjustment of the outlet pressure of the pressure reducer combined with a restricted passage downstream of the pressure reducer dimensioned so as to reduce the flow rate at the outlet pressure range of the pressure reducer. Adjusting the outlet pressure of the pressure reducer can then also adjust the flow rate.

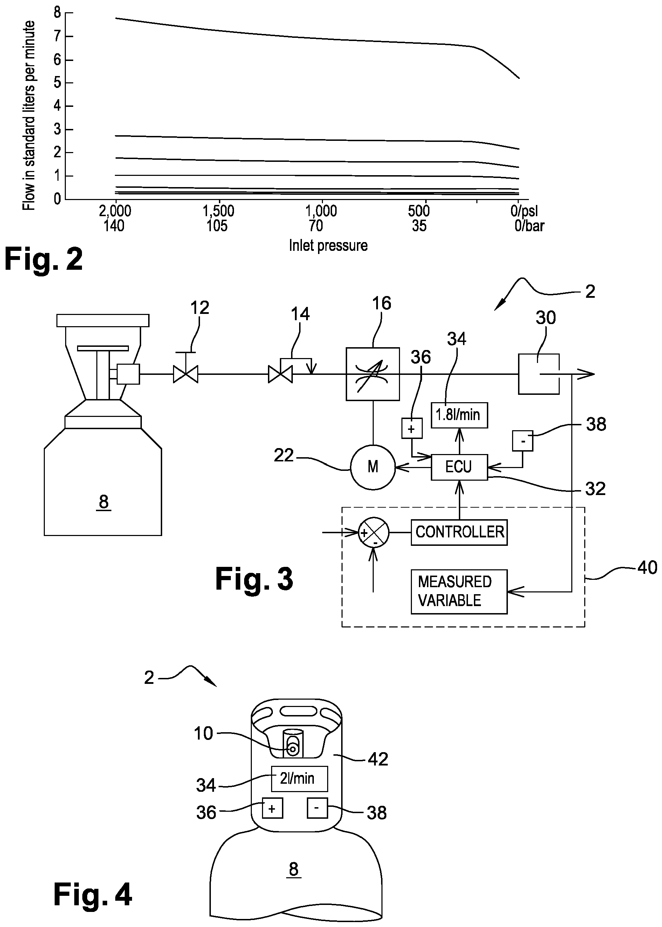

Figure 2 illustrates different curves of the flow rate of the device of figure 1 relative to the inlet pressure, i.e. the pressure in the gas cylinder. We can observe that the flow rate remains essentially constant while emptying the gas cylinder.

Figure 3 illustrates the architecture of a pressure reducer device in accordance with the invention. With reference figure 1, the device 2 can comprise a shut-off valve 6, a pressure reducer 14 and a flow selector 16. Figure 3 illustrates an end user 30 connected to the outlet of the device 2. The flow selector 16 is actuated by the stepper electric motor 22. The device 2 can comprise an electronic control unit 32 of the motor 22. The unit 32 ca also be connected to a display 34 that indicates the flow rate that is selected. The unit 32 can comprises at least one input for manually adjusting the flow rate. For instance it can comprise a first input for a first button 36 for increasing, step by step, the flow rate. Similarly, it can comprise a second input for a second button 38 for decreasing, step by step, the flow rate.

The electronic control unit 32 can also be configured for providing an automatic regulation of a variable or parameter of the end user that is influenced by the gas flow rate. In the case of an end user being a patient receiving oxygen as breathing assistance, the parameter can be the concentration of oxygen in the blood. In that case, depending on how the patient and his lungs take the flow of oxygen, the flow rate can then be automatically adapted by the device so as to reach a given or a minimum concentration of oxygen in his blood. Means for measuring the concentration of oxygen in the blood are well-known as such.

Other variables than the concentration of oxygen can be used as feedback variable for regulating the flow of gas. It can be any kind of parameter of an end user. If the end user is an industrial installation, the parameter can be any kind of parameter of the industrial process that is influenced by the flow of gas.

The regulation can be a closed loop regulation 40 where the flow rate is adjusted depending on the difference between the measure value of the variable and the desired one.

Figure 4 illustrates the device of figures1 and 3 mounted on a gas cylinder 8 and comprising a cover 42. The cover 42 houses the device as such, i.e. its body leaving access to its outlet 10. It houses also the electronic control unit (reference 32 in figure 3). The cover comprises an outer wall that carries the "+" and "-" buttons 36 and 38 and also the display 34 indicating the selected flow rate.

## Claims

1. Pressure reducer device (2) for mounting on a gas cylinder (8) comprising:
- a pressure reducer (14); and
- a flow selector (16) fluidly connected to the pressure reducer (14), downstream of said reducer (14); and
- a stepper motor (22) adapted to actuate the flow selector (16);
wherein the flow selector (16) comprises a rotating element (18) coupled to the stepper motor (22), the rotation of said element (18) changing the cross-section of a passage for the gas;
**characterized in that**
the rotating element comprises a disk (18) with a varying cross-section (18¹) for the gas, said disk (18) being in sliding contact with a fixed passage (20) so as to select the cross-section (18¹) that is traversed by the gas.

2. Pressure reducer device (2) according to claim 1, further comprising a body (4) housing the pressure reducer (14) and the flow selector (16), the stepper motor (22) being mounted on said body (4).

3. Pressure reducer device (2) according to claim 2, wherein the body (4) comprises a threaded end with a gas inlet (6), and a gas outlet (10) downstream of the flow selector (16).

4. Pressure reducer device (2) according to any one of claims 1 to 3, wherein the flow selector (16) is configured to comprise preselected positions of the rotating element (18), each position corresponding to a specific flow rate.

5. Pressure reducer device (2) according to claim 4, further comprising mechanical means (26, 28), preferably of the detent ball type, for temporarily holding the rotating element (18) in each of the preselected positions.

6. Pressure reducer device (2) according to one of claims 4 and 5, wherein the stepper motor (22) comprises step positions that correspond to the preselected positions of the rotating element (18).

7. Pressure reducer device (2) according to any one of claims 1 to 6, wherein the disk (18) comprises calibrated apertures (18¹) distributed along a circular arc around the rotating axis of the disk (18), said apertures (18¹) forming the varying cross-section for the gas.

8. Pressure reducer device (2) according to any one of claims 1 to 7, further comprising:
- an electronic control unit (32) configured for controlling the stepper motor (22); and
- preferably a display (34) connected to the electronic unit (32) and configured for displaying the flow rate.

9. Pressure reducer device (2) according to claim 8, wherein the electronic control unit (32) comprises at least one input for manually selecting a flow rate, preferably a first input (36) for increasing step by step the flow rate and a second input (38) for decreasing step by step the flow rate.

10. Pressure reducer device (2) according to one of claims 8 and 9, wherein the electronic control unit (32) comprises a regulation (40), preferably a closed loop regulation (40), of an output variable of an end user to be connected to the device, said variable being directly influenced by the gas flow rate.

11. Pressure reducer device (2) according to claim 10, wherein the output variable is the concentration of oxygen in the blood of a patient.

12. Pressure reducer device (2) according to claim 10, further comprising a sensor of the concentration of oxygen in the blood of the patient, said sensor being configured for being connected to the electronic control unit (32) for regulating the concentration of oxygen in the blood.

13. Pressure reducer device (2) according to any one of claims 8 to 12, further comprising a cover (42), preferably made of plastic material, housing the pressure reducer (14), the flow selector (16), the stepper motor (22) and the electronic control unit (32).

14. Pressure reducer device (2) according to claim 13, wherein the cover (42) comprises an outer wall carrying the display (34) and at least one input for selecting the flow rate, said at least one input preferably comprising a first input (36) for increasing step by step the flow rate and a second input (38) for decreasing step by step the flow rate.

## Patentansprüche

1. Druckminderervorrichtung (2) zur Montage an einer Gasflasche (8), umfassend:
- einen Druckminderer (14); und
- einen Durchflusswähler (16), der strömungsmäßig mit dem Druckminderer (14) stromabwärts von dem Druckminderer (14) verbunden ist; und
- einen Schrittmotor (22), der geeignet ist, den Durchflusswähler (16) zu betätigen; wobei der Durchflusswähler (16) ein Drehelement (18) umfasst, das mit dem Schrittmotor (22) gekoppelt ist, wobei die Rotation des Drehelements (18) den Querschnitt eines Durchlasses für das Gas verändert
**dadurch gekennzeichnet, dass**
das Drehelement eine Scheibe (18) mit einem variierenden Querschnitt (18¹) für das Gas umfasst, wobei die Scheibe (18) in gleitendem Kontakt mit einem festen Durchlass (20) steht, um den Querschnitt (18¹) zu wählen, der von dem Gas durchquert wird.

2. Druckminderervorrichtung (2) nach Anspruch 1, ferner umfassend ein Gehäuse (4), in dem der Druckminderer (14) und der Durchflusswähler (16) untergebracht sind, wobei der Schrittmotor (22) an dem Gehäuse (4) montiert ist.

3. Druckminderervorrichtung (2) nach Anspruch 2, wobei der Körper (4) ein Gewindeende mit einem Gaseinlass (6) und einen Gasauslass (10) stromabwärts des Strömungsreglers (16) aufweist.

4. Druckminderervorrichtung (2) nach einem der Ansprüche 1 bis 3, wobei der Durchflusswähler (16) so konfiguriert ist, dass er vorgewählte Positionen des Drehelements (18) umfasst, wobei jede Position einer bestimmten Durchflussrate entspricht.

5. Druckminderervorrichtung (2) nach Anspruch 4, ferner umfassend mechanische Mittel (26, 28) vorzugsweise vom Typ Rastkugel, zum vorübergehenden Halten des Drehelements (18) in jeder der vorgewählten Positionen.

6. Druckminderervorrichtung (2) nach einem der Ansprüche 4 und 5, wobei der Schrittmotor (22) Schrittpositionen aufweist, die den vorgewählten Positionen des Drehelements (18) entsprechen.

7. Druckminderervorrichtung (2) nach einem der Ansprüche 1 bis 6, wobei die Scheibe (18) kalibrierte Öffnungen (18¹) aufweist, die entlang eines Kreisbogens um die Drehachse der Scheibe (18) verteilt sind, wobei die Öffnungen (18¹) den variierenden Querschnitt für das Gas bilden.

8. Druckminderervorrichtung (2) nach einem beliebigen der Ansprüche 1 bis 7, ferner umfassend:
- eine elektronische Steuereinheit (32), die zur Steuerung des Schrittmotors (22) konfiguriert ist; und
- vorzugsweise eine Anzeige (34), die mit der elektronischen Steuereinheit (32) verbunden und zum Anzeigen der Durchflussrate konfiguriert ist.

9. Druckminderervorrichtung (2) nach Anspruch 8, wobei die elektronische Steuereinheit (32) mindestens einen Eingang zur manuellen Auswahl einer Durchflussrate aufweist, vorzugsweise einen ersten Eingang (36) zur schrittweisen Erhöhung der Durchflussrate und einen zweiten Eingang (38) zur schrittweisen Verringerung der Durchflussrate.

10. Druckminderervorrichtung (2) nach Anspruch 8 und 9, wobei die elektronische Steuereinheit (32) eine Regelung (40), vorzugsweise eine geschlossene Regelkreisregelung einer Ausgangsgröße eines an die Vorrichtung anzuschließenden Endverbrauchers umfasst, wobei diese Größe direkt von der Gasdurchflussrate beeinflusst wird.

11. Druckminderervorrichtung (2) nach Anspruch 10, wobei die Ausgangsvariable die Konzentration von Sauerstoff im Blut eines Patienten ist.

12. Druckminderervorrichtung (2) nach Anspruch 10, ferner einen Sensor für die Sauerstoffkonzentration im Blut des Patienten umfassend, wobei der Sensor so konfiguriert ist, dass er mit der elektronischen Steuereinheit (32) verbunden ist, um die Sauerstoffkonzentration im Blut zu regulieren.

13. Druckminderervorrichtung (2) nach einem beliebigen der Ansprüche 8 bis 12, ferner eine Abdeckung (42), vorzugsweise aus Kunststoff hergestellt umfassend, die den Druckminderer (14), den Durchflusswähler (16), den Schrittmotor (22) und die elektronische Steuereinheit (32) aufnimmt.

14. Druckminderervorrichtung (2) nach Anspruch 13, wobei die Abdeckung (42) eine Außenwand umfasst, die die Anzeige (34) und mindestens einen Eingang zur Auswahl der Durchflussrate trägt, wobei der mindestens eine Eingang vorzugsweise einen ersten Eingang (36) zur schrittweisen Erhöhung der Durchflussrate und einen zweiten Eingang (38) zur schrittweisen Verringerung der Durchflussrate umfasst.

## Revendications

1. Dispositif (2) faisant office de réducteur de la pression pour son montage sur une bouteille à gaz (8) qui comprend :
- un réducteur de pression (14) ; et
- un sélecteur de débit (16) mis en communication fluidique avec le réducteur de la pression (14), en aval dudit réducteur (14) ; et
- un moteur pas à pas (22) conçu pour actionner le sélecteur de débit (16) ;
dans lequel le sélecteur de débit (16) comprend un élément rotatif (18) couplé au moteur pas à pas (22), la rotation dudit élément (18) modifiant la section transversale d'un passage pour le gaz ;
**caractérisé en ce que** l'élément rotatif comprend un disque (18) avec une section transversale variable (18¹) pour le gaz, ledit disque (18) entrant en contact par glissement avec un passage fixe (20) de manière à sélectionner la section transversale (18¹) qui est traversée par le gaz.

2. Dispositif (2) faisant office de réducteur de la pression selon la revendication 1, qui comprend en outre un corps (4) dans lequel viennent se loger le réducteur de la pression (14) et le sélecteur de début (16), le moteur pas à pas (22) étant monté sur ledit corps (4).

3. Dispositif (2) faisant office de réducteur de la pression selon la revendication 2, dans lequel le corps (4) comprend une extrémité taraudée comprenant une entrée pour le gaz (6) et une sortie pour le gaz (10) en aval du sélecteur de débit (16).

4. Dispositif (2) faisant office de réducteur de la pression selon l'une quelconque des revendications 1 à 3, dans lequel le sélecteur de débit (16) est configuré pour comprendre des positions présélectionnées de l'élément rotatif (18), chaque position correspondant à un débit spécifique de l'écoulement.

5. Dispositif (2) faisant office de réducteur de la pression selon la revendication 4, qui comprend en outre un moyen mécanique (26, 28), de préférence du type d'une bille de verrouillage, destiné au maintien temporaire de l'élément rotatif (18) dans chacune des positions présélectionnées.

6. Dispositif (2) faisant office de réducteur de la pression selon l'une quelconque des revendications 4 et 5, dans lequel le moteur pas à pas (22) comprend des positions de pas qui correspondent aux positions présélectionnées de l'élément rotatif (18).

7. Dispositif (2) faisant office de réducteur de la pression selon l'une quelconque des revendications 1 à 6, dans lequel le disque (18) comprend des orifices étalonnés (18¹) qui sont distribués le long d'un arc circulaire autour de l'axe de rotation du disque (18), lesdits orifices (18¹) formant la section transversale variable pour le gaz.

8. Dispositif (2) faisant office de réducteur de la pression selon l'une quelconque des revendications 1 à 7, qui comprend en outre :
- une unité de commande électronique (32) qui est configurée pour la commande du moteur pas à pas (22) ; et
- de préférence un affichage (34) qui est raccordé à l'unité électronique (32) et qui est configuré pour afficher le débit de l'écoulement.

9. Dispositif (2) faisant office de réducteur de la pression selon la revendication 8, dans lequel l'unité de commande électronique (32) comprend au moins une entrée pour la sélection manuelle d'un débit de l'écoulement, de préférence une première entrée (36) pour augmenter pas à pas le débit de l'écoulement et une deuxième entrée (38) pour diminuer pas à pas le débit de l'écoulement.

10. Dispositif (2) faisant office de réducteur de la pression selon l'une quelconque des revendications 8 et 9, dans lequel l'unité de commande électronique (32) comprend une régulation (40), de préférence une régulation en circuit fermé (40), d'une variable de sortie d'un utilisateur final qui doit se raccorder au dispositif, ladite variable étant directement influencée par le débit de l'écoulement du gaz.

11. Dispositif (2) faisant office de réducteur de la pression selon la revendication 10, dans lequel la variable de sortie représente la concentration de l'oxygène dans le sang d'un patient.

12. Dispositif (2) faisant office de réducteur de la pression selon la revendication 10, qui comprend en outre un capteur de la concentration d'oxygène dans le sang du patient, ledit capteur étant configuré pour venir se raccorder à l'unité de commande électronique (32) à des fins de régulation de la concentration de l'oxygène dans le sang.

13. Dispositif (2) faisant office de réducteur de la pression selon l'une quelconque des revendications 8 à 12, qui comprend en outre une coiffe (42), de préférence réalisée en une matière plastique, qui recouvre le réducteur de la pression (14), le sélecteur de débit (16), le moteur pas à pas (22) et l'unité de commande électronique (32).

14. Dispositif (2) faisant office de réducteur de la pression selon la revendication 13, dans lequel la coiffe (42) comprend une paroi externe qui supporte l'affichage (34) et au moins une entrée pour la sélection du débit de l'écoulement, ladite au moins une entrée comprenant de préférence une première entrée (36) destinée à augmenter pas à pas le débit de l'écoulement et une deuxième entrée (38) destinée à diminuer pas à pas le débit de l'écoulement.
